(19) Europäisches Patentamt
European Patent Office
Office européen des brevets

(11) **EP 1 659 393 B1**

(12) **EUROPÄISCHE PATENTSCHRIFT**

(45) Veröffentlichungstag und Bekanntmachung des Hinweises auf die Patenterteilung:
**09.01.2008 Patentblatt 2008/02**

(51) Int Cl.:
**G01N 21/37** *(2006.01)*

(21) Anmeldenummer: **05110936.1**

(22) Anmeldetag: **18.11.2005**

(54) **Nichtdispersiver Infrarot-Gasanalysator nach dem Zweistrahl-Prinzip**

Non-dispersive infrared gas analyser according to the double beam principle

Analyseur de gaz à infrarouge non dispersif selon le principe du double faisceau

(84) Benannte Vertragsstaaten:
**DE FR GB**

(30) Priorität: **18.11.2004 DE 102004055741**

(43) Veröffentlichungstag der Anmeldung:
**24.05.2006 Patentblatt 2006/21**

(73) Patentinhaber: **SIEMENS AKTIENGESELLSCHAFT
80333 München (DE)**

(72) Erfinder:
- **Kimmig, Ludwig
  76275 Ettlingen (DE)**
- **Ludwig, Michael
  76149 Karlsruhe (DE)**

(56) Entgegenhaltungen:
**EP-A- 0 394 870          WO-A-92/07247
DE-A1- 2 808 033          DE-A1- 3 529 482
DE-C1- 19 518 322          US-A- 3 770 974**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft einen nichtdispersiven Infrarot (NDIR)-Gasanalysator nach dem Zweistrahl-Prinzip mit einem Messstrahlengang und einem Vergleichsstrahlengang, Mitteln zum wechselseitigen zyklischen Unterbrechen beider Strahlengänge, je einem pneumatischen Empfänger in jedem Strahlengang, einer die Empfänger verbindenden Leitung mit einem zu einem Ausgleichsvolumen führenden T-Abzweig, einem in dem T-Abzweig angeordneten strömungs- oder druckempfindlichen Sensor zur Erzeugung eines elektrischen Sensorsignals und einem weiteren strömungs- oder druckempfindlichen Sensor zur Erzeugung eines weiteren elektrischen Sensorsignals.

Die Erfindung betrifft ferner einen NDIR-Gasanalysator nach dem Zweistrahl-Prinzip mit einem Messstrahlengang und einem Vergleichsstrahlengang, Mitteln zum wechselseitigen zyklischen Unterbrechen beider Strahlengänge, je einem pneumatischen Empfänger nach dem Zweischichtprinzip in jedem Strahlengang, jeweils bestehend aus je zwei hintereinanderliegenden Empfängerkammern, wobei die vorderen Empfängerkammern und die hinteren Empfängerkammern durch jeweils eine Leitung verbunden sind, einem in einer Querverbindung zwischen beiden Leitungen angeordneten strömungs- oder druckempfindlichen Sensor zur Erzeugung eines elektrischen Sensorsignals und einem weiteren strömungs- oder druckempfindlichen Sensor zur Erzeugung eines weiteren elektrischen Sensorsignals.

Ein derartiger NDIR-Zweistrahl-Gasanalysator ist aus der DE 35 29 482 A1 bekannt.

Im messtechnischen Nullpunkt, also ohne eine IR-absorbierende Gaskomponente bzw. mit Nullgas im Messstrahlengang, entstehen bei der zyklischen Unterbrechung der Strahlengänge in den beiden pneumatischen Empfängern gleich große Druckimpulse, so dass das Sensorsignal Null ist. Erst ein im Messstrahlengang vorhandenes, die Strahlungsintensität im zugeordneten Empfänger schwächendes, IR-absorbierendes Gas führt zu einer Druckdifferenz und damit zu einem von Null verschiedenen Sensorsignal, das als Messsignal dient.

Zur Überprüfung der vollen Funktionsfähigkeit des auf Null abgeglichenen Gasanalysators sowie zur Ausschaltung von durch Strahleralterung oder Fensterverschmutzung auftretenden Langzeitdriften des Nullpunkts wird bei dem bekannten Gasanalysator eine Anzeige- und Eingriffsmöglichkeit geschaffen, indem in einer die Empfänger im Mess- und Vergleichsstrahlengang verbindenden Leitung ein weiterer strömungs- oder druckempfindlicher Sensor zur Erzeugung eines der Gesamtintensität der detektierten IR-Strahlung proportionalen weiteren Sensorsignals angeordnet ist. Mit diesem weiteren Signal lässt sich auch bei Null-Kompensation des Gasanalysators, wenn also das Messsignal Null ist, die Funktionsfähigkeit des Gasanalysators überprüfen.

Das weitere Signal lässt sich auch als Steuersignal für eine phasengesteuerte Gleichrichtung des Messsignals verwenden, indem es verstärkt und in eine Rechteckspannung umgewandelt wird. Weiter kann das Signal als Eingangsgröße eines Regelkreises zur Regelung des IR-Strahlers eingesetzt werden. Die Strahlungsleistung wird dabei so geregelt, dass dieses Signal stets konstant bleibt, d. h., bei Null-Kompensation hat das System immer eine konstante Empfindlichkeit, da über die Regelung der Einfluss der Strahleralterung und Schmutzablagerungen im optischen Strahlengang kompensiert wird. Damit lässt sich die sonst notwendige Kalibrierung mit Eichgas in bestimmten Zeitabständen vermeiden.

Der Erfindung liegt die Aufgabe zugrunde, den Einfluss der Strahleralterung und Schmutzablagerungen im optischen Strahlengang unmittelbar bei der Messung zu kompensieren, ohne dass eine mechanische Justierung des IR-Strahlers, das Einschieben einer Blende in den Strahlengang oder eine Regelung der Strahlungsleistung des IR-Strahlers erforderlich ist.

Gemäß der Erfindung wird die Aufgabe dadurch gelöst, dass bei den NDIR-Gasanalysatoren der eingangs angegebenen Art der weitere Sensor in der Leitung zwischen dem im Messstrahlengang liegenden Empfänger und dem T-Abzweig angeordnet ist und dass an den Sensoren eine aus beiden Sensorsignalen ein Messsignal erzeugende Auswerteeinrichtung angeschlossen ist.

Das bisher als Messsignal verwendete Sensorsignal ist sowohl von der IR-absorbierenden Gaskomponente und deren Konzentration im Messstrahlengang als auch von Störeinflüssen, wie der Strahleralterung oder Schmutzablagerungen im optischen Strahlengang, abhängig. Dadurch, dass bei dem erfindungsgemäßen NDIR-Gasanalysator der weitere Sensor in einer der beiden Leitungen zwischen dem im Messstrahlengang liegenden Empfänger und der Querverbindung angeordnet ist und an den Sensoren eine aus beiden Sensorsignalen ein Messsignal erzeugende Auswerteeinrichtung angeschlossen ist, können die Störeinflüsse in dem Messsignal rechnerisch unmittelbar kompensiert werden.

Ein weiterer Vorteil gegenüber dem bekannten Gasanalysator besteht darin, dass der weitere Sensor in der bereits vorhandenen Leitung zwischen den Empfängern angeordnet ist und für ihn keine zusätzliche Leitung vorgesehen ist, so dass das weitere Sensorsignal besonders stark und auch fehlerfrei ist, weil die zu erfassende Strömung nicht auf zwei Leitungen aufgeteilt wird.

Um eine druck- bzw. strömungstechnische Symmetrie zu erreichen, ist in vorteilhafter Weise in der den weiteren Sensor enthaltenden Leitung auf der Seite des im Vergleichsstrahlengang liegenden Empfängers ein baugleicher dritter Dummy-Sensor oder ein gleichwirkender Strömungswiderstand angeordnet.

Das erzeugte Messsignal ergibt sich vorzugsweise mit

$$M = K \cdot S1 \,/\, (S2 + K \cdot S1),$$

wobei S1 das Sensorsignal, S2 das weitere Sensorsignal und K eine bei Messung mit Nullgas bestimmte Konstruktionskonstante ist.

Zur Erläuterung der Erfindung wird im Folgenden auf die Figuren der Zeichnung Bezug genommen; im Einzelnen zeigen

Figur 1    ein erstes Ausführungsbeispiel eines NDIR-Gas-analysators mit einfachen pneumatischen Empfängern,

Figur 2    ein zweites Ausführungsbeispiel eines NDIR-Gas-analysators mit Zweischicht-Empfängern und

Figur 3    ein Beispiel für die Strömungs- bzw. Druckverhältnisse in dem Empfängersystem.

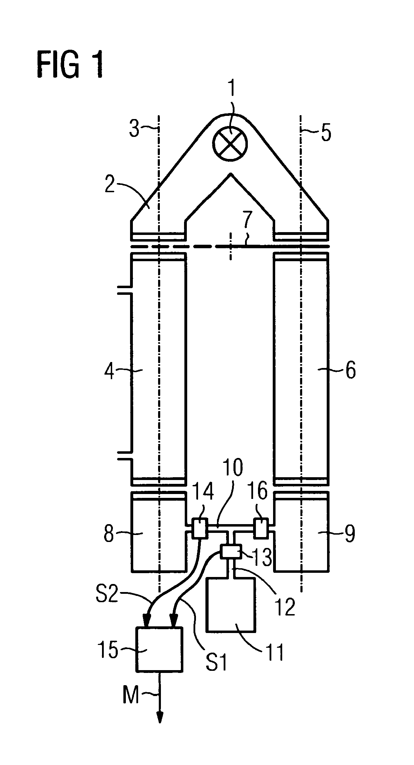

Bei dem in Figur 1 gezeigten NDIR-Zweistrahl-Gasanalysator wird die von einer Infrarot-Strahlungsquelle 1 ausgehende Strahlungsenergie mit Hilfe eines Strahlteilers 2 in zwei parallele Strahlengänge aufgespalten, wobei im Messstrahlengang 3 eine mit dem die zu analysierende Komponente enthaltenden Gasgemisch, kurz Messgas genannt, durchströmte Messküvette 4 und im Vergleichsstrahlengang 5 die mit einem nicht absorbierenden Gas gefüllte Vergleichsküvette 6 liegt.

Von einem nach dem Strahlteiler 2 angeordneten umlaufenden Blendenrad 7 werden die Strahlengänge 3, 5 wechselseitig zyklisch unterbrochen, d. h., während im Messstrahlengang 3 die Strahlintensität zunimmt oder konstant ist, nimmt sie im Vergleichsstrahlengang 5 gleichermaßen ab bzw. wird zu Null und umgekehrt.

Auf die Mess- bzw. Vergleichsküvette 4, 6 folgend sind in den Strahlengängen 3, 5 pneumatische Empfänger 8 und 9 angeordnet, die in der Regel mit einem der zu analysierenden Gaskomponente entsprechenden Gas gefüllt sind. Die Empfängerkammern 8, 9 stehen über eine Leitung 10 miteinander in Verbindung, die mittig angezapft ist. In dem zu einem Ausgleichsvolumen 11 führenden T-Abzweig 12 ist ein strömungs- oder druckempfindlicher Sensor 13 angeordnet, der die bei der Druckdifferenzbildung zwischen den pneumatischen Empfängern 8, 9 auftretenden und von dem Anteil der gesuchten Gaskomponente in dem Messgas aber auch von Störeinflüssen abhängigen Druckimpulse in ein elektrisches Sensorsignal S1 umwandelt.

In der Leitung 10 ist zwischen dem im Messstrahlengang 3 liegenden Empfänger 8 und dem T-Abzweig 12 ein weiterer strömungs- oder druckempfindlicher Sensor 14 zur Erzeugung eines weiteren elektrischen Sensorsignals S2 angeordnet, der zusammen mit dem Sensor 13 an einer Auswerteeinrichtung 15 angeschlossen ist, die aus den beiden Sensorsignalen S1, S2 ein Messsignal M erzeugt. Um eine druck- bzw. strömungstechnische Symmetrie zu erreichen, ist in der Leitung 10 auf der Seite des im Vergleichsstrahlengang 5 liegenden Empfängers 9 ein baugleicher dritter Dummy-Sensor 16 angeordnet.

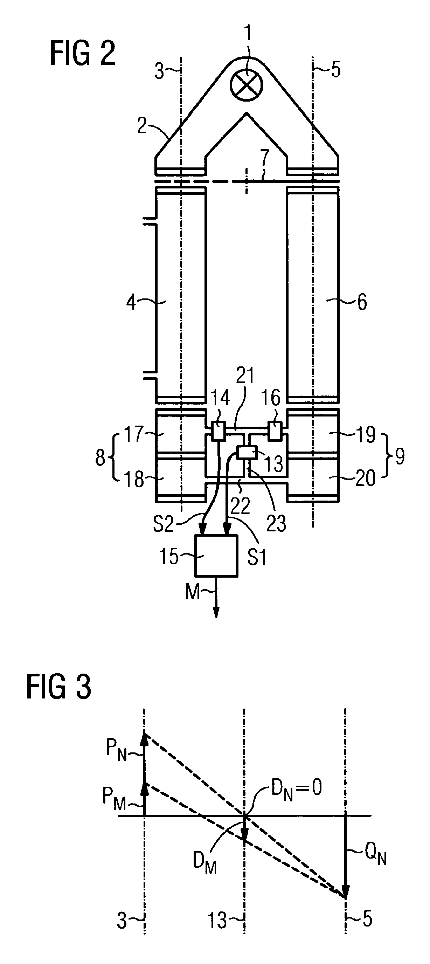

Bei der in Figur 2 gezeigten Ausführungsvariante werden anstelle der einfachen pneumatischen Empfänger so genannte Doppelschichtempfänger 8, 9 mit jeweils zwei hintereinanderliegenden Empfängerkammern 17 und 18 bzw. 19 und 20 verwendet. Die vorderen Empfängerkammern 17 und 19 sind durch eine Leitung 21 und die hinteren Empfängerkammern 18 und 20 durch eine Leitung 22 miteinander verbunden, wobei in einer Querverbindung 23 zwischen beiden Leitungen 21, 22 der Sensor 13 angeordnet ist. Die Sensoren 14 und 16 liegen in der Leitung 21 beiderseits der Querverbindung 23, können aber alternativ auch in der Leitung 22 angeordnet sein.

Figur 3 zeigt die Strömungs- bzw. Druckverhältnisse in dem Empfängersystem. Im messtechnischen Nullpunkt, also ohne eine IR-absorbierende Gaskomponente bzw. mit Nullgas im Messstrahlengang 3, entstehen bei der zyklischen Unterbrechung der Strahlengänge 3, 5 in den beiden pneumatischen Empfängern 8, 9 gleich große Druckimpulse $P_N$ bzw. $Q_N$, die sich am pneumatischen Schwerpunkt des Empfängersystems, wo der Sensor 13 angeordnet ist, zu $D_N = 0$ addieren. Ein im Messstrahlengang 3 vorhandenes, die Strahlungsintensität im zugeordneten Empfänger 8 schwächendes, IR-absorbierendes Gas führt dort zu kleineren Druckimpulsen $P_M$ und damit zu einer von Null verschiedenen Druckdifferenz $D_M$ bzw. zu einem von Null verschiedenen Sensorsignal $S1_M$. Die Druckimpulse $P_N$ (N = Nullgas) und $P_M$ (M = Messgas) in dem Empfänger 8 werden mittels des weiteren Sensors 14 erfasst, wobei folgender Zusammenhang gilt:

$$P_N = P_M + K \cdot D_M \qquad \text{bzw.} \qquad S2_N = S2_M + K \cdot S1_M$$

Dabei ist K eine Konstruktionskonstante, die einmalig berechnet wird:

$$K = (S2_N - S2_M) / S1_M$$

Gerät das System aufgrund von Verschmutzung, Alterung oder sonstigen Störeinflüssen aus dem Gleichgewicht, so erhält man auch mit Nullgas in der Messküvette 4 ein von Null verschiedenes Sensorsignal $S1_N$. Mit diesem Signal $S1_N$ kann man über die bekannte Konstruktionskonstante K den Nullpunkt rechnerisch ermitteln ($P_{N\ korr} = P_N + K \cdot D_N$ bzw. $S2_{N\ korr} = S2_N + K \cdot S1_N$), so dass eine mechanische Justierung, beispielsweise des Strahlers 1, entfallen kann. Auf diese Weise können auch die Störeinflüsse ermittelt und in dem Messergebnis M rechnerisch beseitigt werden.

In der Auswerteeinrichtung 15 wird das Messsignal M aus den Sensorsignalen wie folgt berechnet:

$$M = (S2_N - S2_M) / S2_N = K \cdot S1_M / (S2_M + K \cdot S1_M)$$

## Patentansprüche

1. Nichtdispersiver Infrarot-Gasanalysator nach dem Zweistrahl-Prinzip mit einem Messstrahlengang (3) und einem Vergleichsstrahlengang (5), Mitteln (7) zum wechselseitigen zyklischen Unterbrechen beider Strahlengänge (3, 5), je einem pneumatischen Empfänger (8, 9) in jedem Strahlengang (3, 5), einer die Empfänger (8, 9) verbindenden Leitung (10) mit einem zu einem Ausgleichsvolumen (11) führenden T-Abzweig (12), einem in dem T-Abzweig (12) angeordneten strömungs- oder druckempfindlichen Sensor (13) zur Erzeugung eines elektrischen Sensorsignals (S1) und einem weiteren strömungs- oder druckempfindlichen Sensor (14) zur Erzeugung eines weiteren elektrischen Sensorsignals (S2), **dadurch gekennzeichnet, dass** der weitere Sensor (14) in der Leitung (10) zwischen dem im Messstrahlengang (3) liegenden Empfänger (8) und dem T-Abzweig (12) angeordnet ist und dass an den Sensoren (13, 14) eine aus beiden Sensorsignalen (S1, S2) ein Messsignal (M) erzeugende Auswerteeinrichtung (15) angeschlossen ist.

2. Nichtdispersiver Infrarot-Gasanalysator nach dem Zweistrahl-Prinzip mit einem Messstrahlengang (3) und einem Vergleichsstrahlengang (5), Mitteln (7) zum wechselseitigen zyklischen Unterbrechen beider Strahlengänge (3, 5), je einem pneumatischen Empfänger (8, 9) nach dem Zweischichtprinzip in jedem Strahlengang (3, 5), jeweils bestehend aus je zwei hintereinanderliegenden Empfängerkammern (17, 18, 19, 20), wobei die vorderen Empfängerkammern (17, 19) und die hinteren Empfängerkammern (18, 20) durch jeweils eine Leitung (21, 22) verbunden sind, einem in einer Querverbindung (23) zwischen beiden Leitungen (21, 22) angeordneten strömungs- oder druckempfindlichen Sensor (13) zur Erzeugung eines elektrischen Sensorsignals (S1) und einem weiteren strömungs- oder druckempfindlichen Sensor (14) zur Erzeugung eines weiteren elektrischen Sensorsignals (S2), **dadurch gekennzeichnet, dass** der weitere Sensor (14) in einer der beiden Leitungen (21, 22) zwischen dem im Messstrahlengang (3) liegenden Empfänger (8) und der Querverbindung (23) angeordnet ist und dass an den Sensoren (13, 14) eine aus beiden Sensorsignalen (S1, S2) ein Messsignal (M) erzeugende Auswerteeinrichtung (15) angeschlossen ist.

3. Nichtdispersiver Infrarot-Gasanalysator nach Anspruch 1 oder 2, **dadurch gekennzeichnet, dass** in der den weiteren Sensor (14) enthaltenden Leitung (10, 21) auf der Seite des im Vergleichsstrahlengang (5) liegenden Empfängers (9) ein baugleicher dritter Sensor (16) zur Herstellung einer druck- bzw. strömungstechnischen Symmetrie angeordnet ist.

4. Nichtdispersiver Infrarot-Gasanalysator nach einem der vorangehenden Ansprüche, **dadurch gekennzeichnet, dass** das Messsignal M mit $M = K \cdot S1 / (S2 + K \cdot S1)$ gegeben ist, wobei S1 das Sensorsignal, S2 das weitere Sensorsignal und K eine bei Messung mit Nullgas bestimmte Konstruktionskonstante ist.

## Claims

1. Nondispersive infrared gas analyser using the two-beam principle, having a measuring beam path (3) and a comparison beam path (5), means (7) for reciprocal cyclical interruption of the two beam paths (3, 5), respectively one pneumatic receiver (8, 9) in each beam path (3, 5), a line (10), connected to the receivers (8, 9) and with a T-branch (12) leading to a compensation volume (11), a flow-sensitive or pressure-sensitive sensor (13), arranged in the T-branch (12) and intended for generating an electrical sensor signal (S1), and a further flow-sensitive or pressure-sensitive sensor (14) for generating a further electrical sensor signal (S2), **characterized in that** the further sensor (14) is arranged in the line (10) between the receiver (8) situated in the measuring beam path (3) and the T-branch (12), and **in that** an evaluation device (15) generating a measuring signal (M) from the two sensor signals (S1, S2) is connected to the sensors (13, 14).

2. Nondispersive infrared gas analyser using the two-beam principle, having a measuring beam path (3) and a comparison beam path (5), means (7) for reciprocal cyclical interruption of the two beam paths (3, 5), respectively one pneumatic receiver (8, 9) using the two-layer principle in each beam path (3, 5), respectively consisting of two consecutive receiver chambers (17, 18, 19, 20) each, the front receiver chambers (17, 19) and the rear receiver chambers (18, 20) respectively being connected by a line (21, 22), a flow-sensitive or pressure-sensitive sensor (18), arranged in a transverse connection (20) between two lines (21, 22) and intended for generating an electrical sensor signal (S1), and a further flow-sensitive or pressure-sensitive sensor (14) intended for generating a further electrical sensor signal (S2), **characterized in that** the further sensor (14) is arranged in one of the two lines (21, 22) between the receiver (8) situated in the measuring beam path (3) and the transverse connection (23), and **in that** an evaluation device (15) generating a measuring signal (M) from the two sensor signals (S1, S2) is connected to the sensors (13, 14).

3. Nondispersive infrared gas analyser according to Claim 1 or 2, **characterized in that** for the purpose of producing symmetry in terms of pressure and/or flow a third sensor (16) of the same design is arranged in the line (10, 21) containing the further sensor (14) on the side of the receiver (9) situated in the comparison beam path (5).

4. Nondispersive infrared gas analyser according to one of the preceding claims, **characterized in that** the measuring signal M is given by M = K·S1/(S2 + K·S1), S1 being the sensor signal, S2 the further sensor signal, and K a design constant determined by measurement with zero gas.

**Revendications**

1. Analyseur de gaz à infrarouge non dispersif suivant le principe du double faisceau, ayant un trajet (3) de faisceau de mesure et un trajet (5) de faisceau de comparaison, des moyens (7) d'interruption cyclique alternée des deux trajets (3, 5) de faisceau, respectivement un récepteur (8, 9) pneumatique dans chaque trajet (3, 5) de faisceau, un conduit (10) reliant les récepteurs (8, 9) et ayant une dérivation (12) en T menant à un volume (11) de compensation, un capteur (13) sensible au courant ou à la pression disposé dans la dérivation (12) en T pour produire un signal (S1) électrique de capteur et un autre capteur (14) sensible au courant ou à la pression pour produire un autre signal (S2) électrique de capteur, **caractérisé en ce que** l'autre capteur (14) est monté dans le conduit (10) entre le récepteur (8) se trouvant dans le trajet (8) du faisceau de mesure et la dérivation (12) en T et **en ce qu'**il est raccordé aux capteurs (13, 14) un dispositif (15) d'analyse produisant un signal (M) de mesure à partir des deux signaux (S1, S2) de capteur.

2. Analyseur de gaz à infrarouge non dispersif suivant le principe du double faisceau, ayant un trajet (3) de faisceau de mesure et un trajet (5) de faisceau de comparaison, des moyens (7) d'interruption cyclique alternée des deux trajets (3, 5) de faisceau respectivement un récepteur (8, 9) pneumatique suivant le principe de la double couche dans chaque trajet (3, 5) de faisceau constitué, respectivement, de deux chambres (17, 18, 19, 20) de récepteur, l'une derrière l'autre, les chambres (17, 19) avant de récepteur et les chambres (18, 20) arrière de récepteur étant reliées par, respectivement, un conduit (21, 22), un capteur (13) sensible au courant ou à la pression disposé dans une liaison (23) transversale entre les deux lignes (21, 22) pour produire un signal (S1) électrique de capteur et un autre capteur (14) sensible au courant ou à la pression pour produire un autre signal (S2) électrique de capteur, **caractérisé en ce que** l'autre capteur (14) est monté dans l'un des deux conduits (21, 22) entre le récepteur (8) se trouvant dans le trajet (3) du faisceau de mesure et la liaison (23) transversale et qu'il est raccordé aux capteurs (13, 14) un dispositif (15) d'analyse produisant un signal (M) de mesure à partir des deux signaux (S1, S2) de capteur.

3. Analyseur de gaz à infrarouge non dispersif suivant la revendication 1 ou 2, **caractérisé en ce qu'**il est monté dans le conduit (10, 21) contenant l'autre capteur (14), du côté du récepteur (9) se trouvant dans le trajet (5) du faisceau de comparaison, un troisième capteur (16) de même construction pour la production d'une symétrie du point de vue de la technique de la pression ou du courant.

4. Analyseur de gaz à infrarouge non dispersif suivant l'une des revendications précédentes, **caractérisé en ce que** le signal (M) de mesure est donné par M = K·S1 / (S2 + K·S1), S1 étant le signal du capteur, S2 le signal de l'autre capteur et K une constante de construction déterminée lors d'une mesure sans gaz.

FIG 1

FIG 2

FIG 3

**EP 1 659 393 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3529482 A1